(19) Europäisches Patentamt
European Patent Office
Office européen des brevets

(11) **EP 2 628 575 B1**

(12) **EUROPÄISCHE PATENTSCHRIFT**

(45) Veröffentlichungstag und Bekanntmachung des Hinweises auf die Patenterteilung:
**03.07.2019   Patentblatt 2019/27**

(51) Int Cl.:
*B25J 9/16* (2006.01)     *G01L 3/04* (2006.01)

(21) Anmeldenummer: **13154006.4**

(22) Anmeldetag: **05.02.2013**

(54) **Verfahren zum Ermitteln eines Drehmoments und Industrieroboter**

Method for determining a torque and industrial robot

Procédé destiné à déterminer un couple et robot industriel

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.02.2012   DE 102012202181**

(43) Veröffentlichungstag der Anmeldung:
**21.08.2013   Patentblatt 2013/34**

(73) Patentinhaber: **KUKA Deutschland GmbH 86165 Augsburg (DE)**

(72) Erfinder:
• **Nitz Gernot**
 **86163 Augsburg (DE)**
• **Thümmel, Michael**
 **86163 Augsburg (DE)**

(74) Vertreter: **Schlotter, Alexander Carolus Paul et al Wallinger Ricker Schlotter Tostmann Patent- und Rechtsanwälte Partnerschaft mbB Zweibrückenstrasse 5-7 80331 München (DE)**

(56) Entgegenhaltungen:
**EP-A2- 2 361 736        DE-A1- 19 849 996 US-A1- 2008 258 670**

• **RUDERMAN M ET AL: "Modeling and Identification of Elastic Robot Joints With Hysteresis and Backlash", IEEE TRANSACTIONS ON INDUSTRIAL ELECTRONICS, IEEE SERVICE CENTER, PISCATAWAY, NJ, USA, Bd. 56, Nr. 10, 1. Oktober 2009 (2009-10-01), Seiten 3840-3847, XP011267652, ISSN: 0278-0046, DOI: 10.1109/TIE.2009.2015752**

**Beschreibung**

Die Erfindung betrifft ein Verfahren zum Ermitteln eines Drehmoments und einen Industrieroboter.

Roboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Roboter weisen üblicherweise einen Roboterarm mit mehreren, über Gelenke verbundene Glieder und programmierbare Steuerungen (Steuervorrichtungen) auf, die während des Betriebs die Bewegungsabläufe des Roboters steuern bzw. regeln. Die Glieder werden normalerweise über elektrische Motoren mit Getrieben, die von der Steuervorrichtung angesteuert werden, insbesondere bezüglich der Bewegungsachsen bewegt.

Die DE 10 2007 063 099 A1 offenbart einen Roboter mit mehreren, bezüglich Drehachsen relativ zueinander drehbaren Gliedern. Um die auf die Drehachsen ausgeübten Momente zu ermitteln, umfasst der Roboter geeignete Drehmomentsensoren, die z.B. Dehnmessstreifen umfassen, deren ohmsche Widerstände sich bei Dehnung bzw. Stauchung des Dehnmessstreifens ändern. Die einzelnen Sensoren können mehrere Dehnmessstreifen aufweisen, die z.B. als Halb- oder Vollbrücken geschaltet sind.

Die EP 2 361 736 A2 offenbart eine Drehantriebsvorrichtung mit einer ersten Winkelerfassungseinheit zum Erfassen eines Drehwinkels einer Drehwelle eines Servomotors, eine zweite Winkelerfassungseinheit zum Erfassen eines Drehwinkels eines Untersetzungsgetriebes, und eine Drehmomentberechnungseinheit zum Berechnen eines auf die Drehwelle des Untersetzungsgetriebes wirkenden Drehmomentes gemäß der Winkeldifferenz zwischen den zwei erfassten Drehwinkeln.

Aufgabe der Erfindung ist es, eine verbesserte Ermittlung eines auf ein Glied eines Roboterarms wirkenden Drehmoments anzugeben.

Die Aufgabe der Erfindung wird gelöst durch ein Verfahren gemäß dem Anspruch 1. Weitere Ausführungsformen der vorliegenden Erfindung sind in den abhängigen Patentansprüchen wiedergegeben.

Ein Verfahren zum Ermitteln eines auf ein Glied eines Roboterarms wirkenden Drehmoments, wobei der Roboterarm mehrere, hintereinander angeordnete Glieder aufweist, von denen ein erstes Glied relativ zu einem zweiten Glied der Glieder bezüglich einer Drehachse drehbar gelagert ist und mittels eines relativ zum zweiten Glied ortsfesten Motors und eines dem Motor nachgeschalteten Getriebes bezüglich der Drehachse drehbar ist, aufweisend folgende Verfahrensschritte:

-   Ermitteln des dem Motor zugewandten antriebsseitigen Drehwinkels und des dem Motor abgewandten abtriebsseitigen Drehwinkels des Getriebes, und

-   Ermitteln des auf das erste Glied wirkenden Drehmoments aufgrund der ermittelten antriebsseitigen und abtriebsseitigen Drehwinkel des Getriebes und basierend auf einem mathematischen Modell des Getriebes, welches insbesondere elastische Eigenschaften des Getriebes berücksichtigt.

Ein weiterer Aspekt der Erfindung betrifft einen Industrieroboter, aufweisend

-   einen Roboterarm, der mehrere, hintereinander angeordnete Glieder aufweist, von denen ein erstes Glied relativ zu einem zweiten Glied bezüglich einer Drehachse drehbar gelagert ist und mittels eines relativ zum zweiten Glied ortsfesten Motors und eines dem Motor nachgeschalteten Getriebes bezüglich der Drehachse drehbar ist,

-   eine erste Winkelmessvorrichtung, welche eingerichtet ist, den dem Motor zugewandten antriebsseitigen Drehwinkel des Getriebes zu ermitteln,

-   eine zweite Winkelmessvorrichtung, welche eingerichtet ist, den dem Motor abgewandten abtriebsseitigen Drehwinkel des Getriebes zu ermitteln, und

-   eine mit den beiden Messvorrichtungen verbundene Steuervorrichtung, welche eingerichtet ist, den Motor im Betrieb des Industrieroboters anzusteuern, in der ein mathematisches Modell des Getriebes hinterlegt ist, welches insbesondere elastische Eigenschaften des Getriebes berücksichtigt, und welche eingerichtet ist, das auf das erste Glied wirkende Drehmoment aufgrund der ermittelten antriebsseitigen und abtriebsseitigen Drehwinkeln des Getriebes und basierend auf dem mathematischen Modells zu ermitteln.

Der erfindungsgemäße Industrieroboter ist somit eingerichtet, das erfindungsgemäße Verfahren durchzuführen. Insbesondere ist dessen Steuervorrichtung eingerichtet, das auf das erste Glied wirkende Drehmoment entsprechend dem erfindungsgemäßen Verfahren zu ermitteln.

Der Roboterarm umfasst demnach mehrere, hintereinander angeordnete Glieder, welche insbesondere mittels Antrieben, welche vorzugsweise als elektrische Antriebe ausgebildet sind, relativ zueinender bewegbar sind. Die Antriebe umfassen z.B. Motoren und die Motoren antreibende Leistungselektroniken. Die Antriebe sind insbesondere geregelte Antriebe, vorzugsweise geregelte elektrische Antriebe.

Der Roboterarm ist derart ausgeführt, dass das erste Glied relativ zum zweiten Glied bezüglich der Drehachse drehbar gelagert ist und mittels des relativ zum zweiten Glied ortsfesten Motors und des dem Motor nachgeschalteten Getriebes bezüglich der Drehachse drehbar ist. Im Betrieb des Roboterarms bzw. des Industrieroboters kann auf das erste Glied ein Drehmoment wirken, welches bezüglich des Getriebes ein Abtriebsmoment bzw. abtriebsseitiges Drehmoment ist. Erfindungsgemäß wird dieses Drehmoment nicht direkt, beispielsweise mittels eines Drehmoment-Sensors, ermittelt, sondern indirekt über eine Ermittlung der antriebsseitigen und abtriebsseitigen Drehwinkel des Getriebes und des mathematischen Modells des Getriebes. Wirkt nämlich auf das erste Glied das Drehmoment, so wirkt dieses auch auf das Getriebe. Sind die Getriebeeigenschaften bekannt, dann kann dessen mathematisches Modell erstellt werden, welches einen Zusammenhang zwischen den antriebsseitigen und abtriebsseitigen Drehwinkeln und dem Drehmoment liefert. Die Getriebeeigenschaften können z.B. empirisch ermittelt oder den Datenblättern der Getriebe entnommen werden.

Das mathematische Modell ist z.B. in einem Rechner gespeichert, dem den Drehwinkeln zugeordnete Signale übermittelt werden. Der Rechner ist derart konfiguriert, dass er aufgrund der ermittelten Drehwinkeln und aufgrund des mathematischen Modells das Drehmoment berechnet. Vorzugsweise ist dieser Rechner Teil der Steuervorrichtung des erfindungsgemäßen Industrieroboters, welcher auch dazu vorgesehen ist, in allgemein bekannter Weise die Bewegung des Roboterarms zu steuern, gegebenenfalls zu regeln. Das mathematische Modell kann auch auf der Steuervorrichtung gespeichert sein, so dass diese auch für das Ermitteln des Drehmoments eingerichtet ist.

Das Getriebe kann vorzugsweise eine mit dem Motor verbundene antriebsseitige Welle, eine zumindest indirekt mit dem ersten Glied verbundene abtriebsseitige Welle und wenigstens ein zwischen den beiden Wellen des Getriebes angeordnetes Getriebeglied für eine Übersetzung des Getriebes aufweisen. Das wenigstens eine Getriebeglied umfasst z.B. Zahnräder, wie dies dem Fachmann im Prinzip bekannt ist. In diesem Fall ist vorzugsweise der antriebsseitige Drehwinkel der Drehwinkel der antriebsseitigen Welle und der abtriebsseitige Drehwinkel der Drehwinkel der abtriebsseitigen Welle. Diese können mit entsprechenden Winkelmessvorrichtungen ermittelt werden.

Um den antriebsseitigen Drehwinkel zu bestimmen, kann dieser vorzugsweise durch Ermitteln des Drehwinkels des Motors, insbesondere dessen Welle bestimmt werden. Handelt es sich nämlich bei dem Motor um Teil eines geregelten Antriebs, so ist der Motor für diesen Zweck bereits mit einer Winkelmessvorrichtung z.B. in Form eines Drehgebers versehen.

Das auf das erste Glied wirkende Drehmoment wird vorzugsweise durch folgende Gleichung berechnet:

$$\tau(t) = f(\varphi_B - \varphi_A)$$

wobei $\tau$ das auf das erste Glied wirkende Drehmoment ist und die Funktion $f(\varphi_B - \varphi_A)$ als das mathematische Modell hinterlegt ist.

Für das mathematische Modell des Getriebes sind insbesondere dessen elastischen Eigenschaften berücksichtigt. Diese elastischen Eigenschaften umfassen insbesondere eine Hysterese, welche insbesondere von der Drehrichtung des Getriebes abhängt. Diese drehrichtungsabhängige Hysterese entsteht z.B. durch Zahnräder des Getriebes, insbesondere durch Zahnräder des wenigstens einen Getriebeglieds. Das als Hysteresemodell ausgeführte mathematische Modell stellt einen Zusammenhang zwischen dem zeitlichen Verlauf des Drehmoments und der Verformung des Getriebes dar und kann beispielsweise mittels der Gleichung

$$\tau(t) = f(\varphi_B - \varphi_A)$$

ermittelt werden.

Für ein genaueres mathematisches Modell können nach einer Variante Übertragungsfehler insbesondere des wenigstens einen Getriebeglieds im mathematischen Modell berücksichtigt sein. Reale Getriebe können neben der Elastizität auch kinematischer Fehler bzw. Übertragungsfehler aufweisen, welche für ein verbessertes Ermitteln des auf das erste Glied wirkende Drehmoment im mathematischen Modell des Getriebes berücksichtigt werden können.

Um das auf das erste Glied wirkende Drehmoment verbessert abzuschätzen, kann, wenn es sich bei dem Motor um einen elektrischen Motor handelt, der elektrische Strom des elektrischen Motors ermittelt werden. Der elektrische Strom des Motors ist ein Maß für das vom Motor aufgebrachte Drehmoment.

Um ein genaueres, auf das erste Glied wirkende Drehmoment zu ermitteln, kann es vorgesehen sein, zumindest indirekt das ermittelte, auf das erste Glied wirkenden Drehmoment aufgrund der ermittelten antriebsseitigen und abtriebsseitigen Drehwinkeln des Getriebes und basierend auf dem mathematischen Modell des Getriebes aufgrund des ermittelten elektrischen Stroms zu modifizieren.

Das zumindest indirekte Modifizieren des ermittelten Drehmoments kann beispielsweise dadurch realisiert sein, indem ein weiteres Drehmoment aufgrund des ermittelten elektrischen Stroms und eines Modells des elektrischen Motors ermittelt wird, und das Drehmoment und das weitere Drehmoments fusioniert wird, um ein auf das erste Glied wirkendes, resultierendes Drehmoment zu erhalten. Somit werden also die einzelnen ermittelten Drehmomente fusioniert bzw. kombiniert, um das genauere ermittelte resultierende Drehmoment zu erhalten.

Das zumindest indirekte Modifizieren des ermittelten Drehmoments kann beispielsweise auch dadurch realisiert sein, indem der elektrische Strom zur Stützung des mathematischen Modells verwendet wird. Aufgrund des elektrischen Stroms kann eine Stützung des mathematischen Modells, insbesondere dessen die Hysterese des Getriebes modellierenden Teils des mathematischen Modells durch die Werte des elektrischen Stroms des Motors erreicht werden: Ein Hysteresemodell arbeitet nämlich gewöhnlich mit schaltenden Kennlinien, welche z.B. das Reibverhalten des Getriebes approximieren. Der elektrische Strom des Motors erfasst aber ebenfalls indirekt das Reibverhalten. Dies kann genutzt werden, indem einzelne Zustände des Hysteresemodells im Sinne einer "Referenzierung auf den elektrischen Strom" gezielt auf Basis des elektrischen Stroms umgesetzt werden.

Je nach Ausführungsform des erfindungsgemäßen Verfahrens bzw. des erfindungsgemäßen Industrieroboters wird eine Bestimmung des Abtriebsmoments von Gelenken von Robotern durch Messung der Verformung des Getriebes bereit gestellt. Dadurch entfällt der z.B. dem Getriebe nachgeschaltete Drehmoment-Sensor, wodurch es ermöglicht wird, den erfindungemäßen Industrieroboter steifer und robuster auszuführen.

Da erfindungsgemäß der abtriebsseitige Drehwinkel erfasst wird, kann zusätzlich zur Ermittlung des Drehmomentes die Möglichkeit gegeben werden, die Abtriebsposition des den entsprechenden Gliedern zugeordneten Gelenks gegen Defekte im Getriebe, wie z.B. Zahnbruch, Zahnsprung, zu überwachen. Weiterhin kann die Genauigkeit des erfindungsgemäßen Industrieroboters durch den Ausgleich von Getriebeverformungen und Getriebespiel deutlich gesteigert werden.

Erfindungsgemäß wird demnach je nach Ausführungsform zusätzlich zu den an einem Roboter an den Motoren in der Regel vorhandenen Drehgebern insbesondere hochgenaue Winkelsensoren am Abtrieb des Getriebes angebracht. Dadurch wird es ermöglicht, die Verformung des Getriebes zu messen.

Robotergetriebe sind in der Regel spielbehaftet, ihre Verformung in Abhängigkeit von der Last ist somit normalerweise nicht linear, sondern mit einer Hysterese behaftet und ihr Übertragungsverhalten ist bisweilen nicht vollkommen. Daher werden gegebenenfalls je nach Ausführungsform neben der Getriebeverformung noch andere physikalische Größen für das mathematische Modell des Getriebes erfasst, um eine Aussage über das Drehmoment am Getriebeabtrieb mit hinreichender Genauigkeit zu machen. Dazu gehört z.B., ob die Verformung gerade zu- oder abnimmt, die Stellung des Getriebes und damit der aktuelle Drehwinkelübertragungsfehler des Getriebes, die Drehzahl des Motors und/oder der Motorstrom. Diese Größen gehen gegebenenfalls in eine Modellrechnung ein, welche dann vorzugsweise in Echtzeit den Wert des Abtriebsdrehmoments ergibt.

Ein Ausführungsbeispiel der Erfindung ist exemplarisch in den beigefügten schematischen Zeichnungen dargestellt. Es zeigen:

Fig. 1  einen Roboter mit einem Roboterarm und einer Steuervorrichtung,

Fig. 2  einen elektrischen Motor mit Getriebe zum Bewegen eines der Glieder des Roboterarms relativ zu einem weiteren Glied des Roboterarms und

Fig. 3  eine Hysteresekurve.

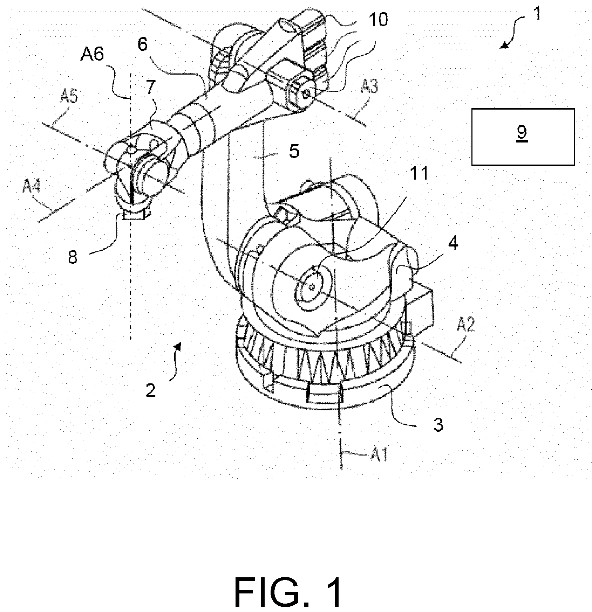

Die Fig. 1 zeigt in einer perspektivischen Darstellung einen Roboter 1 mit einem Roboterarm 2.

Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Drehachsen A4, A5, A6.

Um den Roboter 1 bzw. dessen Roboterarm 2 zu bewegen, umfasst dieser in allgemein bekannter Weise mit einer Steuervorrichtung 9 verbundene Antriebe, die insbesondere elektrische Antriebe sind. In der Figur 1 sind nur einige der elektrischen Motoren 10, 11 dieser Antriebe gezeigt. Auf der Steuervorrichtung 9 läuft ein Rechenprogramm, mittels dem die Steuervorrichtung 9 im Betrieb des Roboters 1 diesen beispielsweise derart ansteuert, dass der Flansch 8 oder ein sogenannter Tool Center Point eine vorbestimmte Bewegung ausführt. Gegebenenfalls regelt die Steuervorrichtung 9 die Antriebe, wie dies im Prinzip dem Fachmann bekannt ist. Gegebenenfalls sind die elektrischen Antriebe geregelte Antriebe und die Steuervorrichtung 9 erzeugt Soll-Signale für die geregelten Antriebe.

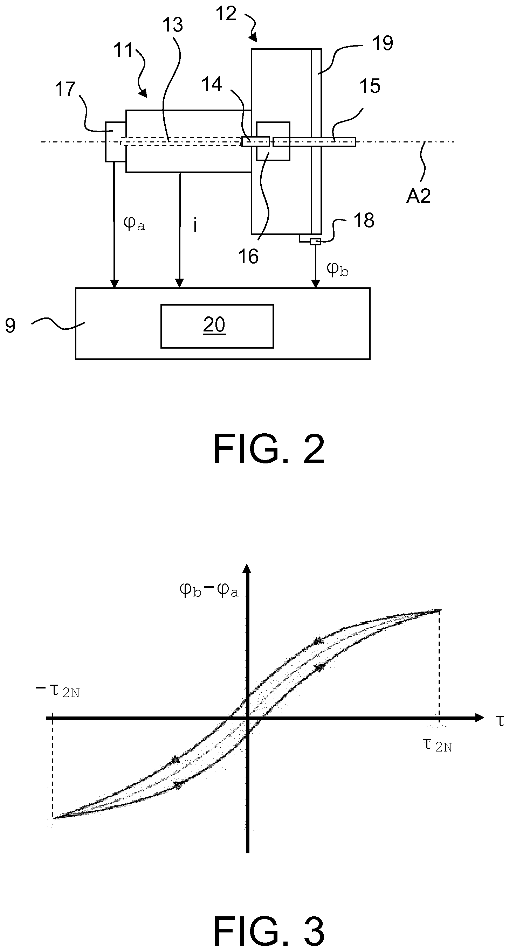

Im Falle des vorliegenden Ausführungsbeispiels sind den jeweiligen Motoren 10, 11 jeweils ein Getriebe 12 nachgelagert. Dies ist in der Fig. 2 am Beispiel des Motors 11 gezeigt, welcher vorgesehen ist, die Schwinge 5 bezüglich zur Drehachse A2 relativ zum Karussell 4 zu drehen. Dabei ist der Motor 11 bzw. dessen Stator ortsfest mit dem Karussell 4 verbunden und bewegt die Schwinge 5 über seine Welle 13 und dem Getriebes 12 bezüglich der Drehachse A2.

Das Getriebe 12 umfasst im Falle des vorliegenden Ausführungsbeispiels eine mit der Welle 13 des Motors 11 verbundene antriebsseitige Welle 14, ein mit der Schwinge 5 verbundene abtriebsseitige Welle 15 und zumindest ein Getriebeglied 16, mittels dem die antriebsseitige und die abtriebsseitige Wellen 14, 15 des Getriebes 12 verbunden sind und welches für den Fachmann in allgemein bekannter Weise eine Übersetzung n des Getriebes 12 realisiert. Das Getriebeglied 16 umfasst z.B. wenigstens ein Zahnrad, wie dies dem Fachmann im Prinzip bekannt ist.

Im bestimmungsgemäßen Betrieb des Roboters 1 treibt die Welle 13 des Motors 11 direkt die antriebsseitige Welle 14 des Getriebes 12 an. Bei einer Drehung der Welle 13 des Motors 11 um einen Drehwinkel $\varphi_A$ dreht sich somit zumindest das dem Motor 11 zugewandte Ende der antriebsseitigen Welle 14 des Getriebes 12 ebenfalls um einen Winkel $\varphi_A$ und, sollte das Getriebe 12a theoretisch ein ideales Getriebe sein, die abtriebsseitige Welle 15 des Getriebes 12 um einen Drehwinkel n*$\varphi_A$, wobei "n" die Übersetzung des Getriebes 12 ist.

Aufgrund von Elastizitäten des Getriebes 12, insbesondere der Wellen 14, 15 und/oder des Getriebeglieds 16 des Getriebes 12, aber auch aufgrund anderer Einflüsse wie z.B. kinematischer Fehler bzw. Übertragungsfehler des Getriebes 12, ergibt sich im Betrieb des Roboters 1 insbesondere wenn die Schwinge 5 relativ zum Karussell 4 einem Drehmoment $D_M$ ausgesetzt ist, insbesondere eine Torsion der Wellen 14, 15 des Getriebes 12 bzw. torsionsähnlich Effekte des Getriebeglieds 16. Aufgrund dieser Effekte unterscheidet sich der reale abtriebsseitige Drehwinkel $\varphi_B$, um den sich die abtriebsseitige Welle 14 des Getriebes 12 mit ihrer der Schwinge 5 zugewandten Seite um die Drehachse A2 dreht, von dem theoretisch, bei Verwendung eines idealen Getriebes erwartenden abtriebsseitigen Drehwinkels. Der Torsion ist demnach ein Verdrehungswinkel des Getriebes 12

$$\Delta\varphi = \varphi_B - \varphi_A$$

zugeordnet.

Im Falle des vorliegenden Ausführungsbeispiels ist dem Motor 11 eine Winkelmessvorrichtung z.B. in Form eines Drehgebers 17 zugeordnet, welcher eingerichtet ist, den Drehwinkel $\varphi_A$ der Welle 13 des Motors 11 und somit den Drehwinkel der antriebsseitigen Welle 14 des Getriebes 12 zu ermitteln. Der Drehgeber 17 ist z.B. in den Motor 11 integriert und ist insbesondere mit der Steuervorrichtung 9 verbunden, um dieser ein Signal zu übertragen, welches eine Information über den Drehwinkel $\varphi_A$ der Welle 13 des Motors 11 zu übermitteln.

Im Falle des vorliegenden Ausführungsbeispiels weist der Roboter 1 eine weitere Winkelmessvorrichtung z.B. in Form eines Messkopfs 18 auf, welche eingerichtet ist, den abtriebsseitigen Drehwinkel $\varphi_B$ der abtriebsseitigen Welle 15 des Getriebes 12 zu ermitteln. Der Messkopf 18 wirkt z.B. mit einer Messverkörperung 19 am Gehäuse des Getriebes 12 zusammen und ist insbesondere mit der Steuervorrichtung 9 verbunden, um dieser ein Signal zu übertragen, welches eine Information über den Drehwinkel $\varphi_B$ der abtriebsseitigen Welle 14 des Getriebes 12 zu übermitteln.

Im Falle des vorliegenden Ausführungsbeispiels ist in der Steuervorrichtung 9 ein mathematisches Modell 20 des Getriebes 12 gespeichert, welches insbesondere die Elastizität, gegebenenfalls auch einen kinematischen Fehler bzw. einen Übertragungsfehler des Getriebes 12 modelliert. Das mathematische Modell 20 ist derart ausgeführt, dass aufgrund der ermittelten Drehwinkel $\varphi_A$, $\varphi_B$, also des Drehwinkels $\varphi_A$ der Welle 13 des Motors 11 bzw. des Drehwinkel $\varphi_B$ der abtriebsseitigen Welle 15 des Getriebes 12, es der Steuervorrichtung 9 mittels eines geeigneten Rechenprogramms ermöglicht ist, das auf die Schwinge 5 wirkende Drehmoment i zu ermitteln bzw. zu berechnen.

Im Falle des vorliegenden Ausführungsbeispiels ist das mathematische Modell 20 vom Getriebe 12 derart ausgeführt, dass es eine Hysterese entsprechend der Drehrichtung des Getriebes 12, insbesondere dessen Getriebeglieds 16 berücksichtigt. Dies ist in der Fig. 3 veranschaulicht, wobei $\tau_{2N}$ ein Nennwert des Getriebes 12 ist. Ein reines Hysteresemodell stellt einen Zusammenhang zwischen dem zeitlichen Verlauf des Drehmoments i und der Verformung des Getriebes 12 insbesondere dessen Getriebeglieds 16 dar, sodass gilt:

$$\tau(t) = f(\varphi_B - \varphi_A)$$

Im Falle des vorliegenden Ausführungsbeispiels sind für das mathematische Modell 20 des Getriebes 12 auch kinematische Fehler bzw. Übertragungsfehler des Getriebes 12 berücksichtigt, welche unabhängig von der Hysterese und von Elastizitäten des Getriebes 12 einen zu erwartenden Zusammenhang zwischen den Drehwinkeln $\varphi_A$, $\varphi_B$ verfälschen können.

Im Falle des vorliegenden Ausführungsbeispiels kann für das Ermitteln des auf die Schwinge 5 wirkenden Drehmoments zusätzlich der elektrische Strom i verwendet werden, mit dem der Motor 11 beaufschlagt ist. Eine Information über den elektrischen Strom i des Motors 11 wird dazu ebenfalls der Steuervorrichtung 9 zugeführt. Wie es dem Fachmann allgemein bekannt ist, besteht ein Zusammenhang zwischen dem elektrischen Stroms i des Motors 11 und dem dazu gehörigen, aufgebrachten Drehmoment des Motors 11.

Im Falle des vorliegenden Ausführungsbeispiels ist es vorgesehen, dass die Steuervorrichtung 9 aufgrund des ermittelten elektrischen Stroms i des Motors 11 die Güte des berechneten Abtriebsmoments, d.h. des auf die Schwinge 5 wirkenden Drehmoments weiter zu verbessern. Dies kann im Falle des vorliegenden Ausführungsbeispiels z.B. folgendermaßen erfolgen:

Das auf die Schwinge 5 wirkende Drehmoment (Abtriebsmoment) wird sowohl mittels des mathematischen Modells 20 des Getriebel 12 als auch mittels des elektrischen Stroms i des Motors 11 ermittelt. Dafür wird z.B. ein in der Steuervorrichtung 9 hinterlegtes mathematisches Modell vom Motor 11 verwendet. Anschließend werden die ermittelten Abtriebsmomente insbesondere entsprechend ihrer Güteeigenschafen zur Erhöhung der Genauigkeit des ermittelten Abtriebsmoments fusioniert bzw. kombiniert. Dies kann z.B. durch eine gewichtete Mittelwertbildung oder durch bestimmte Filterung der Abtriebsmomente erreicht werden.

Alternativ oder zusätzlich kann aufgrund des elektrischen Stroms i eine Stützung des mathematischen Modells 20, insbesondere dessen die Hysterese des Getriebes 12 modellierenden Teils des mathematischen Modells 20 durch die Werte des elektrischen Stroms i des Motors 11 erreicht werden: Ein Hysteresemodell arbeitet nämlich gewöhnlich mit schaltenden Kennlinien, welche z.B. das Reibverhalten des Getriebes 12 approximieren. Der elektrische Strom i des Motors 11 erfasst aber ebenfalls indirekt das Reibverhalten. Dies kann genutzt werden, indem einzelne Zustände des Hysteresemodells im Sinne einer "Referenzierung auf den elektrischen Strom i" gezielt auf Basis des elektrischen Stroms i umgesetzt werden.

**Patentansprüche**

1. Verfahren zum Ermitteln eines auf ein Glied eines Roboterarms (2) wirkenden Drehmoments, wobei der Roboterarm (2) mehrere, hintereinander angeordnete Glieder (3-7) aufweist, von denen ein erstes Glied (5) relativ zu einem zweiten Glied (4) der Glieder bezüglich einer Drehachse (A2) drehbar gelagert ist und mittels eines relativ zum zweiten Glied (4) ortsfesten elektrischen Motors (11) und eines dem Motor (11) nachgeschalteten Getriebes (12) bezüglich der Drehachse (A2) drehbar ist, aufweisend folgende Verfahrensschritte:

- Ermitteln des dem Motor (11) zugewandten antriebsseitigen Drehwinkels ($\varphi_A$) und des dem Motor (12) abgewandten abtriebsseitigen Drehwinkels ($\varphi_B$) des Getriebes (12), und
- Ermitteln des auf das erste Glied (5) wirkenden Drehmoments aufgrund der ermittelten antriebsseitigen und abtriebsseitigen Drehwinkeln ($\varphi_A$, $\varphi_B$) des Getriebes (12) und basierend auf einem mathematischen Modell (20) des Getriebes (12), welches insbesondere elastische Eigenschaften des Getriebes (12) berücksichtigt, **gekennzeichnet durch**
- Ermitteln eines elektrischen Stroms (i) des elektrischen Motors (11),
- zumindest indirekt Modifizieren des ermittelten, auf das erste Glied (5) wirkenden Drehmoments aufgrund der ermittelten antriebsseitigen und abtriebsseitigen Drehwinkel ($\varphi_A$, $\varphi_B$) des Getriebes (12) und basierend auf dem mathematischen Modell (20) des Getriebes (12) aufgrund des ermittelten elektrischen Stroms (i),
- Ermitteln eines weiteren Drehmoments aufgrund des ermittelten elektrischen Stroms (i) und eines Modells des elektrischen Motors (11), und
- Fusionieren des Drehmoments und des weiteren Drehmoments mittels einer gewichteten Mittelwertbildung, um ein auf das erste Glied (5) wirkendes, resultierendes Drehmoment zu erhalten.

2. Verfahren nach Anspruch 1, bei dem das Getriebe (12) eine mit dem Motor (11) verbundene antriebsseitige Welle (14), eine zumindest indirekt mit dem ersten Glied (5) verbunden abtriebsseitige Welle (15) und wenigstens ein zwischen den beiden Wellen (14, 15) des Getriebes (12) angeordnetes Getriebeglied (16) für eine Übersetzung des Getriebes (12) aufweist, wobei insbesondere der antriebsseitige Drehwinkel ($\varphi_A$) der Drehwinkel der antriebsseitigen Welle (14) und der abtriebsseitige Drehwinkel ($\varphi_B$) der Drehwinkel der abtriebsseitigen Welle (15) ist.

3. Verfahren nach Anspruch 1 oder 2, aufweisend Ermitteln des antriebsseitigen Drehwinkels ($\varphi_A$) durch Ermitteln des Drehwinkels des Motors (11) insbesondere dessen Welle (13).

4. Verfahren nach einem der Ansprüche 1 bis 3, bei dem das Drehmoment durch folgende Gleichung berechnet wird:

$$\tau(t) = f(\varphi_B - \varphi_A)$$

wobei $\tau$ das auf das erste Glied (5) wirkende Drehmoment ist und die Funktion $f(\varphi_B - \varphi_A)$ als das mathematische Modell (20) hinterlegt ist.

5. Verfahren nach einem der Ansprüche 1 bis 4, bei dem für das mathematische Modell (20) eine Hysterese, welche insbesondere von der Drehrichtung des Getriebes (12) abhängt, berücksichtigt ist.

6. Verfahren nach einem der Ansprüche 1 bis 5, bei dem Übertragungsfehler insbesondere des wenigstens einen Getriebeglieds (16) im mathematischen Modell (20) berücksichtigt sind.

7. Verfahren nach Anspruch 1, aufweisend Verwenden des elektrischen Stroms (i) in dem Teil des mathematischen Modells (20), der die Hysterese des Getriebes (12) modelliert.

8. Industrieroboter, aufweisend

- einen Roboterarm (2), der mehrere, hintereinander angeordnete Glieder (3-7) aufweist, von denen ein erstes Glied (5) relativ zu einem zweiten Glied (4) bezüglich einer Drehachse (A2) drehbar gelagert ist und mittels eines relativ zum zweiten Glied (4) ortsfesten Motors (11) und eines dem Motor (11) nachgeschalteten Getriebes (12) bezüglich der Drehachse (A2) drehbar ist,

- eine erste Winkelmessvorrichtung (17), welche eingerichtet ist, den dem Motor (11) zugewandten antriebsseitigen Drehwinkel ($\varphi_A$) des Getriebes (12) zu ermitteln,

- eine zweite Winkelmessvorrichtung (18), welche eingerichtet ist, den dem Motor (12) abgewandten abtriebsseitigen Drehwinkel ($\varphi_B$) des Getriebes (12) zu ermitteln, und

- eine mit den beiden Messvorrichtungen (17, 18) verbundene Steuervorrichtung (9), welche eingerichtet ist, den Motor (11) im Betrieb des Industrieroboters (1) anzusteuern, in der ein mathematisches Modell (20) des Getriebes (12) hinterlegt ist, welches insbesondere elastische Eigenschaften des Getriebes (12) berücksichtigt, und welche eingerichtet ist das auf das erste Glied (5) wirkende Drehmoment aufgrund der ermittelten antriebsseitigen und abtriebsseitigen Drehwinkeln ($\varphi_A$, $\varphi_B$) des Getriebes (12) und basierend auf dem mathematischen Modells (20) insbesondere gemäß dem Verfahren nach einem der Ansprüche 1 bis 7 zu ermitteln.

**9.** Industrieroboter nach Anspruch 8, bei dem die erste Messvorrichtung (17) eingerichtet ist, den Drehwinkel einer Welle (13) des Motors (11) zu ermitteln, um den antriebsseitigen Drehwinkel ($\varphi_A$) zu ermitteln.

## Claims

**1.** A method of determining a torque acting on a member of a robot arm (2), wherein the robot arm (2) comprises a plurality of members (3-7) which are arranged one after the other and of which a first member (5) is mounted rotatably relative to a second member (4) of the members with respect to an axis of rotation (A2) and is rotatable, by means of an electric motor (11) which is stationary relative to the second member (4) and by means of a gear mechanism (12) which is connected downstream of the motor (11), with respect to the axis of rotation (A2), wherein the method comprises the following processing steps:

- determining the drive-side angle of rotation ($\varphi_A$) of the gear mechanism (12) which angle faces towards the motor (11) and the output-side angle of rotation ($\varphi_B$) of the gear mechanism (12) which angle faces away from the motor (12), and

- determining the torque acting on the first member (5) on the basis of the determined drive-side and output-side angles of rotation ($\varphi_A$, $\varphi_B$) of the gear mechanism (12) and on the basis of a mathematical model (20) of the gear mechanism (12) which in particular takes into account elastic properties of the gear mechanism (12),

**characterized by**

- determining an electric current (i) of the electric motor (11),

- at least indirectly modifying, on the basis of the determined electric current (i), the torque acting on the first member (5) which has been determined on the basis of the determined drive-side and output-side angles of rotation ($\varphi_A$, $\varphi_B$) of the gear mechanism (12) and on the basis of the mathematical model (20) of the gear mechanism (12),

- determining a further torque on the basis of the determined electric current (i) and a model of the electric motor (11), and

- merging the torque and the further torque by means of the forming of a weighted average value in order to obtain a resultant torque acting on the first member (5).

**2.** The method according to claim 1, in which the gear mechanism (12) comprises a drive-side shaft (14) which is connected to the motor (11), an output-side shaft (15) which is connected at least indirectly to the first member (5) and at least one gear mechanism member (16) which is arranged between the two shafts (14, 15) of the gear mechanism (12) and which is provided as gearing for the gear mechanism (12), wherein in particular the angle of rotation ($\varphi_A$) on the drive side is the angle of rotation of the shaft (14) on the drive side, and the angle of rotation ($\varphi_B$) on the output side is the angle of rotation of the shaft (15) on the output side.

**3.** The method according to claim 1 or 2, comprising determining the angle of rotation ($\varphi_A$) on the drive side by determining the angle of rotation of the motor (11), in particular of the shaft (13) of the latter.

**4.** The method according to any one of the claims 1 to 3, in which the torque is calculated by the following equation:

$$\tau\,(t) = f\,(\varphi_B - \varphi_A)$$

where $\tau$ is the torque acting on the first member (5), and the function $f(\varphi_B - \varphi_A)$ is stored as the mathematical model (20).

**5.** The method according to any one of the claims 1 to 4, in which a hysteresis, which in particular depends on the direction of rotation of the gear mechanism (12), is taken into account for the mathematical model (20).

6. The method according to any one of the claims 1 to 5, in which transmission errors, in particular of the at least one gear member (16), are taken into account in the mathematical model (20).

7. The method according to claim 1, comprising using the electric current (i) in that part of the mathematical model (20) which models the hysteresis of the gear mechanism (12).

8. An industrial robot comprising:

- a robot arm (2) which comprises a plurality of members (3-7) which are arranged one after the other and of which a first member (5) is mounted rotatably relative to a second member (4) with respect to an axis of rotation (A2) and is rotatable, by means of a motor (11) which is stationary relative to the second member (4) and by means of a gear mechanism (12) which is connected downstream of the motor (11), with respect to the axis of rotation (A2),
- a first angle measuring device (17) which is arranged to determine the drive-side angle of rotation $(\varphi_A)$ of the gear mechanism (12) which angle faces towards the motor (11),
- a second angle measuring device (18) which is arranged to determine the output-side angle of rotation $(\varphi_B)$ of the gear mechanism (12) which angle faces away from the motor (12), and
- a control device (9) which is connected to the two measuring devices (17, 18) and which is arranged to control the motor (11) during operation of the industrial robot (1) and in which a mathematical model (20) of the gear mechanism (12) is stored, which mathematical model (20) in particular takes into account elastic properties of the gear mechanism (12), and which control device (9) is arranged to determine the torque acting on the first member (5) on the basis of the determined drive-side and output-side angles of rotation $(\varphi_A, \varphi_B)$ of the gear mechanism (12) and on the basis of the mathematical model (20), in particular according to the method according to any one of the claims 1 to 7.

9. The industrial robot according to claim 8, in which the first measuring device (17) is arranged to determine the angle of rotation of a shaft (13) of the motor (11) in order to determine the angle of rotation $(\varphi_A)$ on the drive side.

**Revendications**

1. Procédé pour déterminer un couple agissant sur un organe d'un bras de robot (2), dans lequel le bras de robot (2) présente plusieurs organes (3-7) agencés l'un derrière l'autre, dont un premier organe (5) est logé en rotation par rapport à un axe de rotation (A2) par rapport à un deuxième organe (4) des organes et est rotatif par rapport à l'axe de rotation (A2) au moyen d'un moteur électrique (11) fixe par rapport au deuxième organe (4) et d'une transmission (12) montée en aval du moteur (11), présentant les étapes de procédé suivantes :

- détermination de l'angle de rotation côté entraînement $(\varphi_A)$ tourné vers le moteur (11) et de l'angle de rotation côté sortie $(\varphi_B)$ de la transmission (12) opposé au moteur (12), et
- détermination du couple agissant sur le premier organe (5) en raison des angles de rotation côté entraînement et côté sortie $(\varphi_A, \varphi_B)$ déterminés de la transmission (12) et sur la base d'un modèle mathématique (20) de la transmission (12), lequel tient compte en particulier de propriétés élastiques de la transmission (12), **caractérisé par**
- la détermination d'un courant électrique (i) du moteur électrique (11),
- la modification au moins indirecte du couple déterminé, agissant sur le premier organe (5) en raison des angles de rotation côté entraînement et côté sortie $(\varphi_A, \varphi_B)$ déterminés de la transmission (12) et sur la base du modèle mathématique (20) de la transmission (12) en raison du courant électrique (i) déterminé,
- la détermination d'un autre couple en raison du courant électrique (i) déterminé et d'un modèle du moteur électrique (11), et
- la fusion du couple et de l'autre couple au moyen d'une formation de valeur moyenne pondérée afin d'obtenir un couple résultant, agissant sur le premier organe (5).

2. Procédé selon la revendication 1, dans lequel la transmission (12) présente un arbre côté entraînement (14) relié au moteur (11), un arbre côté sortie (15) relié au moyen indirectement au premier organe (5) et au moins un organe de transmission (16) agencé entre les deux arbres (14, 15) de la transmission (12) pour une transmission de la transmission (12), dans lequel en particulier l'angle de rotation côté entraînement $(\varphi_A)$ est l'angle de rotation de l'arbre côté entraînement (14) et l'angle de rotation côté sortie $(\varphi_B)$ est l'angle de rotation de l'arbre côté sortie (15).

3. Procédé selon la revendication 1 ou 2, présentant la détermination de l'angle de rotation côté entraînement $(\varphi_A)$ par détermination de l'angle de rotation du moteur (11) en particulier de son arbre (13).

4. Procédé selon l'une quelconque des revendications 1 à 3, dans lequel le couple est calculé par l'équation suivante :

$$\tau(t) = f(\varphi_B - \varphi_A)$$

dans lequel $\tau$ est le couple agissant sur le premier organe (5) et la fonction $f(\varphi_B - \varphi_A)$ est déposée en tant que le modèle mathématique (20).

5. Procédé selon l'une quelconque des revendications 1 à 4, dans lequel une hystérésis, laquelle dépend en particulier du sens de rotation de la transmission (12), est prise en compte pour le modèle mathématique (20).

6. Procédé selon l'une quelconque des revendications 1 à 5, dans lequel des erreurs de transmission en particulier de l'au moins un organe de transmission (16) sont prises en compte dans le modèle mathématique (20).

7. Procédé selon la revendication 1, présentant l'utilisation du courant électrique (i) dans la partie du modèle mathématique (20), qui modélise l'hystérésis de la transmission (12).

8. Robot industriel, présentant

- un bras de robot (2), qui présente plusieurs organes (3-7) agencés l'un derrière l'autre, dont un premier organe (5) est logé en rotation par rapport à un axe de rotation (A2) par rapport à un deuxième organe (4) et est rotatif par rapport à l'axe de rotation (A2) au moyen d'un moteur (11) fixe par rapport au deuxième organe (4) et d'une transmission (12) montée en aval du moteur (11),
- un premier dispositif de mesure d'angle (17), lequel est aménagé pour déterminer l'angle de rotation côté entraînement ($\varphi_A$) de la transmission (12) tourné vers le moteur (11),
- un deuxième dispositif de mesure d'angle (18), lequel est aménagé pour déterminer l'angle de rotation côté sortie ($\varphi_B$) de la transmission (12) opposé au moteur (12),
- un dispositif de commande (9) relié aux deux dispositifs de mesure (17, 18), lequel est aménagé pour commander le moteur (11) dans le fonctionnement du robot industriel (1), dans lequel est déposé un modèle mathématique (20) de la transmission (12), lequel tient compte en particulier de propriétés élastiques de la transmission (12), et lequel est aménagé pour déterminer le couple agissant sur le premier organe (5) en raison des angles de rotation côté entraînement et côté sortie ($\varphi_A$, $\varphi_B$) déterminés de la transmission (12) et sur la base du modèle mathématique (20) en particulier selon le procédé selon l'une quelconque des revendications 1 à 7.

9. Robot industriel selon la revendication 8, dans lequel le premier dispositif de mesure (17) est aménagé pour déterminer l'angle de rotation d'un arbre (13) du moteur (11) afin de déterminer l'angle de rotation côté entraînement ($\varphi_A$).

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007063099 A1
- EP 2361736 A2